**Europäisches Patentamt**

**European Patent Office**

**Office européen des brevets**

(11) Veröffentlichungsnummer: **0 046 901**
**B1**

(12) **EUROPÄISCHE PATENTSCHRIFT**

(45) Veröffentlichungstag der Patentschrift:
14.11.84

(21) Anmeldenummer: 81106268.6

(22) Anmeldetag: 12.08.81

(51) Int. Cl.³: **C 02 F 3/28**

(54) Verfahren und Vorrichtung zur anaeroben biologischen Reinigung von Abwasser.

(30) Priorität: 01.09.80 DE 3032869

(43) Veröffentlichungstag der Anmeldung:
10.03.82 Patentblatt 82/10

(45) Bekanntmachung des Hinweises auf die Patenterteilung:
14.11.84 Patentblatt 84/46

(84) Benannte Vertragsstaaten:
AT BE CH DE FR GB IT LI NL

(56) Entgegenhaltungen:
AT - B - 346 779
DE - A - 2 331 192
DE - B - 2 839 872
US - A - 2 071 591

(73) Patentinhaber: Linde Aktiengesellschaft,
Abraham-Lincoln-Strasse 21, D-6200 Wiesbaden (DE)

(72) Erfinder: Fuchs, Uwe, Heiterwanger Strasse 46,
D-8000 München 70 (DE)
Erfinder: Reimann, Hans, Dr., Rudolf-Wilke-Weg 21,
D-8000 München 71 (DE)

(74) Vertreter: Schaefer, Gerhard, Dr., Linde
Aktiengesellschaft Zentrale Patentabteilung,
D-8023 Höllriegelskreuth (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Verfahren zur anaeroben biologischen Reinigung von organische Verunreinigungen enthaltendem Abwasser mit Hilfe von anaeroben Mikroorganismen, bei dem das Wasser durch mindestens einen Reaktor geleitet wird, in dem die anaeroben Mikroorganismen auf einem Trägermaterial angesiedelt werden, sowie eine Vorrichtung zur Durchführung des Verfahrens.

Solche anaeroben Abwasserreinigungsverfahren sind seit langem bekannt. Das Trägermaterial, das in üblicher Weise aus Gesteinsbrocken, Schlacken oder Aktivkohle besteht, dient dabei dazu, zum einen ein Ausschwemmen der anaeroben Mikroorganismen aus dem Reaktor mit dem behandelten Abwasser zu verhindern und zum anderen im Reaktor einen möglichst guten Kontakt zwischen zu behandelndem Abwasser und Biomasse herzustellen. Nachteilig bei solchen Verfahren ist jedoch, dass sich das Abwasser in den Reaktoren bevorzugte Wege sucht und somit nur ein Teil der Oberfläche des Trägermaterials mit dem Abwasser in Kontakt kommt. Weiterhin ist eine langsame Bewegung der Trägerteilchen, die den Stoffumsatz intensiviert, aufgrund der Materialbeschaffenheit nicht ohne weiteres möglich und würde in jedem Falle zu grossem Stoffabrieb am Trägermaterial selbst führen. Darüber hinaus ist besonders bei Verwendung von Reaktoren, die ein relativ hohes Verhältnis von Länge zu Durchmesser und damit eine Strömung mit nur geringer Rückvermischung aufweisen, die Gefahr gegeben, dass bei hoher Konzentration des organischen Substrats die anaeroben Bakterien in ihrem Wachstum gehemmt oder sogar zerstört werden. Aber selbst wenn die Beladung des Trägermaterials mit Substrat niemals so hoch wird, dass die Biomasse geschädigt werden kann, besteht dann immer noch die Gefahr, dass, insbesondere bei geringer laminarer Strömung des zu behandelnden Abwassers durch den Reaktor die Biomasse unbeeinflussbar so üppig auf dem Trägermaterial gedeiht, dass es zu einer Verstopfung des Reaktors kommen kann.

Neben anaeroben Abwasserreinigungsverfahren sind auch Denitrifikationsverfahren bekannt, bei denen ein Trägermaterial als Ansiedlungsfläche für die Denitrifikanten verwendet wird. In der AT-B 346779 ist beispielsweise ein Verfahren zum Entfernen von Nitrat aus Wasser beschrieben, bei dem der mit organischen Substanzen als Kohlenstoffdonator versetzte Rohwasserstrom im Aufwärts- oder im Abwärtsstrom durch einen Reaktor geleitet wird, in dem aus schwimmfähigen, kugelförmigen Körpern mit rauher Oberflächenstruktur und einem spezifischen Gewicht erheblich unter 1 als Trägerteilchen für die den Denitrifikationsprozess bewirkenden Mikroorganismen ein Festbett gebildet ist. Als Trägerteilchen werden Styroporkugeln oder Kugeln aus geschäumtem Silikat benutzt, wobei die Trägerteilchen in allen Fällen eine rauhe Oberfläche aufweisen sollen. Der Durchmesser der Trägerteilchen ist mit 5 bis 10 mm angegeben.

Weiterhin ist aus der DE-A 2331 192 ein Verfahren zur biologischen Denitrifikation von Abwasser bekannt, bei dem das nitrit- und nitrathaltige Abwasser aufwärts durch einen Reaktor geleitet wird, in dem aus festen Trägerteilchen für die denitrifizierenden Mikroorganismen ein Fliessbett gebildet ist. Als geeignete Trägerteilchenmaterialien sind Kohle, Glas- oder Kunststoffperlen, Sand, Aluminium oder Aktivkohle genannt, wobei die einzelnen Trägerteilchen eine Grösse von 0,2 bis 3 mm und ein spezifisches Gewicht von mindestens 1,100 kg/m³ aufweisen sollen.

Solche Denitrifikationsverfahren unterscheiden sich aber von einem anaeroben Abwasserreinigungsverfahren, von dem bei der vorliegenden Anmeldung ausgegangen wird, schon allein durch die biologischen Abbauvorgänge, so dass eine Übertragung der bei Denitrifikationsverfahren bekannten Massnahmen auf anaerobe Abbauverfahren nicht ohne weiteres möglich ist.

Darüber hinaus werden, wie bereits erwähnt, bei diesen bekannten Denitrifikationsverfahren als Trägermaterialien schwimmfähige, kugelförmige Körper mit rauher Oberflächenstruktur bzw. solche Trägermaterialien, wie Sand, Glas- oder Kunststoffperlen, Aluminium oder Aktivkohle, die allenfalls ebenso nur eine rauhe Oberflächenstruktur aufweisen, verwendet. Diese rauhe Oberflächenstruktur ermöglicht aber nur die Ansiedlung von Denitrifikanten auf der Trägerteilchenoberfläche, was einen unkontrollierten Bakterienabrieb und einen entsprechenden Verlust an Bakterienmasse für den Abbauvorgang mit sich bringt.

Neben solchen speziellen Denitrifikationsverfahren sind des weiteren auch Verfahren zur biologischen Abwasserreinigung bekannt, bei denen eine vollbiologische Totalaufbereitung mit aerobem Kohlenstoffabbau, Nitrifikation und gegebenenfalls Denitrifikation in einer einzigen Verfahrensstufe durchgeführt und bei denen das Abwasser über eine lose, in einem Drehbehälter umgewälzte Schüttung stückiger Schaumstoffkörper geleitet wird (DE-B 2839872).

Das Prinzip dieser Verfahren beruht dabei darauf, dass aufgrund der Drehbewegung des Drehbehälters die Schaumstoffkörper bis über die Wasseroberfläche in die Luft- oder Sauerstoffatmosphäre angehoben werden und beim Auftauchen der Schaumstoffkörper aus dem Wasser das Eigengewicht der flüssigkeitsgefüllten Schaumstoffkörper zur Wirkung kommt, wodurch diese, da sie flexibel sind, sich zusammenpressen und hierbei das aufgesaugte Wasser teilweise wieder beschleunigt aus den Poren abgeben, während die aufgenommenen Schwebstoffe und die herangebildete Biomasse grösstenteils in den Poren haften bleiben. Beim Wiedereintauchen in das Wasser erfahren die mit Luft bzw. Sauerstoff gefüllten Schaumstoffkörper dann einen Auftrieb, der die Schaumstoffkörper gegen die übrige Schützung und die Begrenzungswände des Drehkörpers drückt, wobei die Luft teilweise aus den Poren feinverteilt ausströmt. Da sich beim Drehvorgang die Lage der Schaumstoffkörper ständig ändert, variiert auch die Grösse der auf die Schaumstoffkörper einwirkenden Auftriebskräfte, so dass bei weiterer Bewegung der Haftkörper durch das Wasser im Austausch mit Luft wieder Wasser aufgenommen werden kann.

Abgesehen davon, dass diese Art von Totalaufbereitung von Abwasser nichts mit einer anaeroben Abwasserreinigung zu tun hat, ist das dazu eingesetzte Verfahren auch insofern ungünstig, als zur Erzielung der Stoffwechselvorgänge die Aufrechterhaltung einer Zwangsbewegung der Schaumstoffkörper abwechselnd durch das Wasser und die darüber befindliche Gasatmosphäre mit Hilfe eines Drehkörpers notwendig ist, was aber sowohl die Erstellungs- als auch die Betriebskosten einer entsprechenden Anlage negativ beeinflusst.

Schliesslich ist aus der US-A 2,071,591 ein aerobes Abwasserreinigungsverfahren bekannt, bei dem in einem Belüftungstank für die aeroben Mikroorganismen frei bewegliche Trägerteilchen, bestehend aus natürlichen Schwämmen oder Materialien mit ähnlicher, hoch poröser und elastischer Struktur, eingebracht werden.

Dabei sollen diese flexiblen Trägerteilchen allein durch Ausnutzung der unterschiedlichen hydrostatischen Druckbedingungen im Belüftungstank abwechselnd zusammengepresst und entspannt werden, damit durch abwechselndes Einsaugen und Ausstossen der Flüssigkeit die in dieser enthaltenen Verunreinigungen mit den an den Trägerteilchen angelagerten aeroben Bakterien in Kontakt gebracht werden. Zur Bewegung der Trägerteilchen durch den Belüftungstank sind die durch den Lufteintrag erzeugten Strömungen vorgesehen, so dass dieses Verfahren schon von daher nicht auf eine anaerobe Abwasserreinigung zu übertragen ist. Dazu kommt, dass bei den für die Trägerteilchen verwendeten Materialien allenfalls eine zufällige Verteilung von grossen und kleinen Poren gegeben ist, wodurch das angestrebte Anlagern einer aeroben Biomasse nur unregelmässig erfolgen kann. Da aber die auf den Trägerteilchen vorhandene Bakterienschicht deren Auftrieb beeinflusst, kann somit die gewünschte Auf- und Abwärtsbewegung der Trägerteilchen nur unvollkommen verwirklicht werden, was aber die Stoffwechselvorgänge und damit die Erzielung einer hohen Abbauleistung behindert.

Die Erfindung liegt die Aufgabe zugrunde, ein anaerobes Abwasserreinigungsverfahren der eingangs genannten Art sowie eine Vorrichtung zur Durchführung des Verfahrens so auszugestalten, dass auf einfache und vor allem wirtschaftliche Weise der Abbau zumindest eines wesentlichen Anteils der in dem zu behandelnden Abwasser enthaltenen Verunreinigungen mit hoher Prozessstabilität ermöglicht wird.

Diese Aufgabe wird erfindungsgemäss dadurch gelöst, dass in dem Reaktor als Trägermaterial für die anaeroben Mikroorganismen makroporöse Stoffteilchen mit einem Durchmesser von 10 bis 50 mm, mit einem geringen spezifischen Gewicht von 10 bis 200 kg/m³ und mit offenen Makroporen von 0,1 bis 5 mm Durchmesser verwendet werden.

Mit dem Einsatz solcher Stoffteilchen als Trägermaterial wird den am Anaerobprozess beteiligten, nur sehr langsam wachsenden Mikroorganismen eine grosse aktive Oberfläche zur Ansiedlung zur Verfügung gestellt, auf der sie sich gleichmässig und fest fixiert verteilen. Damit kann es nicht zu solchen Verlusten an Bakterienmasse kommen, die die Leistung des Reaktors vermindern oder im Extremfall zum Erliegen bringen. Durch die Makroporen des Trägermaterials werden dabei die Bakterien zu einem dezentralisierten Wachstum gezwungen, wodurch sich zum einen eine wesentlich grössere Stoffaustauschfläche als bei herkömmlichen Verfahren mit anderen Trägermaterialien ergibt und zum anderen ein übermässiges Wachstum von vornherein behindert ist. Zudem wird durch das geringe spezifische Gewicht der makroporösen Stoffteilchen erreicht, dass diese schon bei geringen Strömungsgeschwindigkeiten des zu behandelnden Abwassers aufgewirbelt werden können, wodurch der Stoffumsatz intensiviert wird.

Die angegebene Grösse der Makroporen gewährleistet nicht nur, dass den am Anaerobprozess beteiligten Bakterien eine grosse Oberfläche zur Ansiedlung zur Verfügung gestellt wird, sondern schliesst auch ein Verstopfen der Poren weitgehend aus. Die angegebene Grösse der einzelnen Stoffteilchen fördert dagegen eine hohe Biomassenkonzentration. Ausserdem können Teilchen mit einer solchen Grösse leicht aufgewirbelt werden, um, wie bereits erwähnt, den Stoffumsatz noch weiter zu intensivieren.

Aufgrund der erzielbaren hohen Reinigungsleistung kann das erfindungsgemässe Verfahren allein ohne weitere Behandlung des Abwassers für eine möglichst weitgehende Reinigung von Abwasser bis zu End-$BSB_5$-Gehalten von 50 mg/l unter Berücksichtigung einer hohen Betriebssicherheit eingesetzt werden, wobei verhältnismässig kurze Faulzeiten möglich sind. Besonders wirtschaftlich lässt sich das erfindungsgemässe Verfahren jedoch als Vorreinigung mit nachgeschalteter Endreinigungsstufe einsetzen, wobei dann nur End-$BSB_5$-Werte in der Vorreinigung von einigen 100 mg/l erreicht werden müssen. Aufgrund der grossen Stoffaustauschflächen sind dann kurze Behandlungszeiten von wenigen Tagen oder gar Stunden möglich.

Wird der anaerobe Abbauprozess in zwei Reaktoren durchgeführt, kann im ersten Reaktor die Säurebildungsphase und im zweiten Reaktor die Methanbildungsphase ablaufen. Dabei kann entweder in beiden Reaktoren oder nur im zweiten Reaktor ein erfindungsgemässes Trägermaterial vorhanden sein.

Als Trägermaterialien, die die vorstehenden Bedingungen erfüllen, werden vorteilhafterweise Stoffe aus organischen Polymerverbindungen verwendet. Insbesondere Polyurethan-Schaumstoff oder -Schaumgummi, oder ähnliche Stoffe mit offenen Makroporen, wie sie in der kunststoffverarbeitenden Industrie anfallen, erfüllen die vorstehend genannten Forderungen, wobei noch dazu preisgünstige Rest- und Abfallstücke zum Einsatz kommen können.

Zur Intensivierung des Stoffumsatzes ist es des weiteren vorteilhaft, mit dem Trägermaterial ein Wirbelbett zu bilden, wobei das Abwasser von unten nach oben durch den Reaktor mit entsprechender Geschwindigkeit geleitet wird.

Ebenso vorteilhaft ist es aber auch zu dem gleichen Zweck, den Reaktor als Rührreaktor zu betreiben. Bei einer langsamen Umdrehungsgeschwindigkeit des Rührers von ca. 1 bis 10 U/min. ist dabei die mechanische Beanspruchung der Stoffteilchen so gering, dass diese nicht zerschlagen werden. Andererseits ist die Umdrehungsgeschwindigkeit dennoch gross genug, um die einzelnen Stoffteilchen so zu bewegen, dass ein intensiver Stoffaustausch möglich ist. Der Rührer kann dabei beispielsweise aus einem einfachen, flexiblen Kunststoffstab gebildet sein.

Falls jedoch ein hochbelastetes Abwasser behandelt werden soll, ist es zweckmässiger, mit dem Trägermaterial ein Festbett zu bilden, um eine ausreichende Stoffwechseltätigkeit zu erreichen, wobei dann die Strömungsgeschwindigkeit des Abwassers entsprechend eingestellt werden muss.

Eine Vorrichtung zur Durchführung des Verfahrens umfasst mindestens einen Reaktor, der einen Zulauf für organische Verunreinigungen enthaltendes Abwasser, einen Ablauf für behandeltes Abwasser sowie eine Abzugsleitung für Faulgas aufweist und in dem ein Trägermaterial für anaerobe Mikroorganismen angeordnet ist. Erfindungsgemäss sind in dem Reaktor als Trägermaterial für die anaeroben Mikroorganismen makroporöse Stoffteilchen mit einem Durchmesser von 10 bis 50 mm, mit einem geringen spezifischen Gewicht von 10 bis 200 kg/m³ und mit offenen Makroporen von 0,1 bis 5 mm Durchmesser angeordnet.

Zum Zurückhalten des Trägermaterials im Reaktor ist zweckmässigerweise am Ablauf des Reaktors eine Trenneinrichtung, wie beispielsweise ein einfaches Sieb, angeordnet.

Da bei einer solchen erfindungsgemässen Vorrichtung sich zum einen die am Anaerobprozess beteiligten Bakterien in den Makroporen des Trägermaterials festsetzen und zum andern das Trägermaterial mit Hilfe der Trenneinrichtung in dem Reaktor zurückgehalten werden kann, besteht die Möglichkeit, falls eine solche Vorrichtung nur zur Vorreinigung eines Abwassers eingesetzt werden soll, diese ohne Zwischenschalten einer Zwischenklärung an eine nachgeschaltete Endreinigungsstufe anzuschliessen.

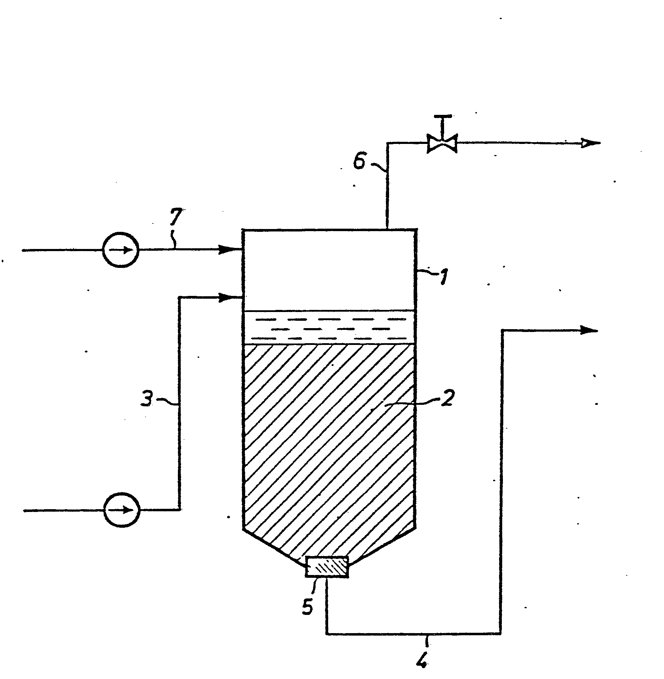

In der Zeichnung ist ein vorteilhaftes Ausführungsbeispiel einer Vorrichtung zur Durchführung des Verfahrens schematisch dargestellt, das nachstehend näher erläutert wird:

In der Figur ist mit 1 ein zylindrischer, gegen die Atmosphäre geschlossener Reaktor bezeichnet. In dem Reaktor 1 ist ein Trägermaterial 2 für an einem Anaerobprozess beteiligte Mikroorganismen, vorzugsweise aus Schaumstoff oder Schaumgummi, angeordnet. Das zu behandelnde Abwasser wird über einen Zulauf 3 am oberen Ende des Behälters 1 eingeleitet, während das behandelte Abwasser am unteren Ende über einen Ablauf 4, dem eine Trenneinrichtung 5 vorgeschaltet ist, die beispielsweise ein einfaches Sieb sein kann, abgezogen wird. Am oberen Ende des Reaktors 1 ist desweiteren eine Abzugsleitung 6 für das beim Anaerobprozess entstehende Faulgas sowie eine Zuleitung 7 für Natriumhydroxid oder andere basische Stoffe zur Einstellung des pH-Wertes angeschlossen.

Anstelle des dargestellten Festbettes aus Schaumstoff-Flocken besteht auch die Möglichkeit, ein Wirbelbett aus Schaumstoff-Flocken zu bilden, und dabei das Abwasser mit entsprechender Geschwindigkeit von unten nach oben durch den Reaktor zu leiten. Das gereinigte Abwasser wird dann über den oben angeordneten Ablauf mit Trenneinrichtung abgezogen. Welche Prozessführung gewählt wird, hängt im wesentlichen von der Konzentration des zu behandelnden Abwassers ab.

Nachstehend sind Zahlenangaben für ein Auslegungsbeispiel zur Reinigung eines hochbelasteten Abwassers in einem erfindungsgemäss mit Schaumstoff gefüllten Anaerobreaktor angegeben:

| | |
|---|---|
| Trägermaterial: | Polyurethan-Schaumstoffwürfel mit 2 cm Kantenlänge |
| Trägermasse: | 1100 kg $\triangleq$ 20 kg pro m³ Reaktorbett |
| Reaktorvolumen: | 65 m³ (zylindrisch) |
| Reaktorbettvolumen: | 55 m³ |
| Höhe/Durchmesser: | 3:1 |
| Zulaufmenge: | 4 m³/h |
| Verweilzeit: | 14 h |
| $BSB_5$-Zulauf: | 5000 mg/l |
| $BSB_5$-Ablauf: | < 500 mg/l |
| Temperatur im Reaktor: | 35 bis 39°C |
| pH-Wert im Reaktor: | 6,5 bis 7,5 |
| $CH_4$-Gehalt im Abgas: | > 75 Vol.-% |

**Patentansprüche**

1. Verfahren zur anaeroben biologischen Reinigung von organische Verunreinigungen enthaltendem Abwasser mit Hilfe von anaeroben Mikroorganismen, bei dem das Wasser durch mindestens einen Reaktor geleitet wird, in dem die anaeroben Mikroorganismen auf einem Trägermaterial angesiedelt werden, dadurch gekennzeichnet, dass in dem Reaktor als Trägermaterial für die anaeroben Mikroorganismen makroporöse Stoffteilchen mit einem Durchmesser von 10 bis 50 mm, mit einem geringen spezifischen Gewicht von 10 bis 200 kg/m³ und mit offenen Makroporen von 0,1 bis 5 mm Durchmesser verwendet werden.

2. Verfahren nach Anspruch 1, dadurch gekennzeichnet, dass als Trägermaterial Stoffe aus organischen Polymerverbindungen verwendet werden.

3. Verfahren nach Anspruch 1 oder 2, dadurch gekennzeichnet, dass mit dem Trägermaterial ein Wirbelbett gebildet wird, wobei das Abwasser von unten nach oben durch den Reaktor mit entsprechender Geschwindigkeit geleitet wird.

4. Verfahren nach Anspruch 1 oder 2, dadurch gekennzeichnt, dass der Reaktor als Rührreaktor betrieben wird.

5. Verfahren nach Anspruch 1 oder 2, dadurch gekennzeichnet, dass mit dem Trägermaterial ein Festbett gebildet wird.

6. Vorrichtung zur Durchführung des Verfahrens nach einem der Ansprüche 1 bis 5 mit mindestens einem Reaktor, der einen Zulauf für organische Verunreinigungen enthaltendes Abwasser, einen Ablauf für behandeltes Abwasser sowie eine Abzugsleitung für Faulgas aufweist und in dem ein Trägermaterial für anaerobe Mikroorganismen angeordnet ist, dadurch gekennzeichnet, dass in dem Reaktor als Trägermaterial für die anaeroben Mikroorganismen makroporöse Stoffteilchen mit einem Durchmesser von 10 bis 50 mm, mit einem geringen spezifischen Gewicht von 10 bis 200 kg/m³ und mit offenen Makroporen von 0,1 bis 5 mm Durchmesser angeordnet sind.

## Claims

1. A process for the anaerobic biological purification of sewage, containing organic impurities, with the aid of anaerobic micro-organisms, in which the sewage is led through at least one reactor in which the anaerobic micro-organisms are established on a carrier material, characterised in that macroporous particles, having a diameter of 10 to 50 mm, a low specific gravity of 10 to 200 kg/m³ and open macro-pores of 0.1 to 5 mm in diameter, are used in the reactor as carrier material for the anaerobic micro-organisms.

2. A process according to Claim 1, characterised in that materials made of organic polymeric compounds are used as carrier material.

3. A process according to Claim 1 or 2, characterised in that a fluidized bed is formed with the carrier material, the waste water being led through the reactor from the bottom to the top at a corresponding velocity.

4. A process according to Claim 1 or 2, characterised in that the reactor is operated as an agitating reactor.

5. A process according to Claim 1 or 2, characterised in that a fixed bed is formed with the carrier material.

6. Apparatus for carrying out the process according to one of Claims 1 to 5 comprising at least one reactor which has an inlet for sewage containing organic impurities, an outlet for treated waste water and a discharge duct for sewer gas and in which a carrier material for anaerobic micro-organisms is arranged, characterised in that macroporous particles which have a diamter of 10 to 50 mm, a low specific gravity of 10 to 200 kg/m³ and open macro-pores with a diameter of 0.1 to 5 mm, are arranged in the reactor as carrier material for the anaerobic micro-organisms.

## Revendications

1. Procédé de purification biologique anaérobie d'une eau usée contenant des impuretés organiques à l'aide de micro-organismes anaérobies, dans lequel on fait passer l'eau à travers au moins un réacteur dans lequel les micro-organismes anaérobies sont ensemencés sur un matériau support, caractérisé en ce que, dans le réacteur, on emploie comme matériau support pour les micro-organismes anaérobies des particules de substance macroporeuse ayant un diamètre de 10 à 50 mm, un faible poids spécifique de 10 à 200 kg/m³ et des pores ouverts de 0,1 à 5 mm de diamtre.

2. Procédé selon la revendication 1, caractérisé en ce que l'on emploie comme matériau de support des substances à base de composés de polymères organiques.

3. Procédé selon la revendication 1 ou 2, caractérisé en ce que l'on forme avec le matériau support un lit fluidisé, l'eau usée passant du bas vers le haut à travers le réacteur avec une vitesse appropriée.

4. Procédé selon la revendication 1 ou 2, caractérisé en ce que l'on fait fonctionner le réacteur comme réacteur agité.

5. Procédé selon la revendication 1 ou 2, caractérisé en ce que l'on forme avec le matériau support un lit fixe.

6. Dispositif de mise en œuvre du procédé selon l'une quelconque des revendications 1 à 5, avec au moins un réacteur comportant une arrivée de l'eau usée contenant des impuretés organiques, une sortie pour l'eau usée traitée ainsi qu'une conduite d'évacuation pour le gaz de fermentation et dans lequel est disposé un matériau support pour les micro-organismes anaérobies, caractérisé en ce que dans le réacteur sont disposées comme matériau support pour les micro-organismes anaérobies des particules de substance macroporeuse ayant un diamètre de 10 à 50 mm, un poids spécifique faible de 10 à 200 kg/m³ et des pores ouverts de 0,1 à 5 mm de diamètre.